# DEMANDE DE BREVET EUROPEEN

(11) **EP 4 488 048 A1**
(43) Date de publication de la demande: **08.01.2025**
(21) Numéro de dépôt: 24185630.1
(22) Date de dépôt: 01.07.2024
(51) Int. Cl.: B32B 3/06, B32B 5/18, B32B 7/022, B32B 7/12, B32B 9/02, B32B 9/04, B32B 27/08, B32B 27/30, B32B 27/32, B32B 27/40

(54) **REVETEMENT DE SOL SPORTIF EN DALLE OU LAME**

(30) Priorité: 04.07.2023 FR 2307124
(71) Demandeur: GERFLOR, 69009 Lyon (FR)
(72) Inventeur: PAILLOT, Pierrick, 69009 LYON (FR)
(74) Mandataire: Cabinet Laurent & Charras

(57) **Abrégé**

L'invention concerne un revêtement de sol sportif en forme de dalle ou lame à pose libre et comprenant des moyens d'accouplement (6) avec une dalle ou lame adjacente.

Selon l'invention, le revêtement comprend successivement, du sommet vers le sol, et liées entre elles :
- une couche de surface (2) comprenant au moins une couche souple (2a) d'épaisseur comprise entre 0,3 mm et 1 mm et comprenant un module en compression compris entre 10 MPa et 100 MPa ;
- une couche intermédiaire (3) rigide d'épaisseur comprise entre 3,5 mm et 7 mm et comprenant un module en flexion compris entre 1000 MPa et 10 000 MPa, et un module en compression compris entre 35MPa et 300 MPa ;
- une sous-couche (5) amortissante d'épaisseur supérieure à 3 mm, notamment comprise entre 3 mm et 10 mm, et de préférence entre 5 mm et 10 mm, et présentant un module en compression compris entre 0,5 MPa et 15 MPa.

## Description

### Domaine technique

La présente invention concerne une structure multicouche pour la réalisation d'un revêtement de sol dit « sportif », c'est-à-dire à destination des salles de sport, salles de gym, gymnases polyvalents, ou similaires.

### Art antérieur

Un revêtement de sol sportif doit permettre d'assurer la sécurité et la protection de l'utilisateur, notamment en termes d'absorption des chocs selon la norme EN 14808. Un revêtement de sol sportif dit « ponctuel » doit notamment satisfaire la norme NF EN 14904 de juin 2006, selon laquelle le revêtement de sol doit absorber 25% des chocs, mesuré selon la norme EN 14808.

D'une manière générale, un sol sportif se présente sous la forme d'une structure multicouche comprenant une couche supérieure d'usure dont les fonctions principales sont la maîtrise de la glissance, la résistance à l'usure, la facilité de nettoyage et l'aspect décoratif, liée à une couche d'envers en mousse de polychlorure de vinyle d'une densité généralement comprise entre 0.30 et 0.40 et d'une épaisseur généralement comprise entre 4 et 9 mm permettant l'absorption des chocs ponctuels.

Cependant, en pratique, ce type de revêtement de sol est souvent posé dans des gymnases dits polyvalents, c'est-à-dire susceptibles d'accueillir des manifestations extra sportives pouvant dégrader le revêtement de sol.

En effet, la mousse d'envers est soumise au trafic, à des charges lourdes ou des impacts non prévus et pouvant générer des déformations irréversibles et détériorer le revêtement de sol. En effet, si le revêtement de sol sportif est excellent pour absorber les chocs ponctuels, il l'est moins pour résister aux sollicitations susmentionnées.

Il est connu le document WO2018/197543 qui permet de résoudre le problème de la polyvalence des lieux où est posé le revêtement en disposant un film polymère entre une couche de surface et une couche d'envers en mousse de polychlorure de vinyle, lequel film présentant une raideur supérieure à 100 N/mm et un module d'Young supérieur à 1,5 GPa, et ce afin de limiter les phénomènes d'indentation dans la mousse en permettant une meilleure répartition des contraintes et une diminution de l'effet de cisaillement sur les parois des cellules de la mousse, correspondant à la déformation perpendiculaire à la pénétration du poinçon.

Ce type de sol sportif donne entière satisfaction à l'utilisateur en termes de sécurité et de protection. Cependant, il présente quelques inconvénients inhérents au fait que la couche de mousse, qui permet l'absorption des chocs ponctuels, est destinée à être collée sur le sol.

En effet, la technique de pose collée est longue et fastidieuse, et lorsque ces revêtements sont posés sans colle, il s'ensuit des problèmes de déformation, d'apparition de gonfles, de glissement ou d'ouverture de joint entre deux structures de revêtement de sol, notamment du fait de la dilatation/contraction lors de la pose sur une grande surface.

Par ailleurs, ce type de revêtement de sol sportif est généralement présentés en rouleaux et présente donc des inconvénients supplémentaires en termes de logistique, notamment du fait du poids des rouleaux et de la surface relativement importante à couvrir pour l'application considérée. D'autre part, la pose de ce type de revêtement est complexe et demande une forte expertise des poseurs.

Il est également connu le document EP1570143 qui décrit un revêtement de sol sportif présentant une couche à base de bois recouverte d'un vernis et comprenant une couche résiliente en mousse obtenue à partir d'un thermoplastique. Le revêtement comprend des moyens d'assemblage mâles / femelles en périphérie et est adapté à la pose libre.

Ce revêtement peut présenter une couche support qui peut être réalisée par exemple en MDF, HDF, contreplaqué, panneaux de particules, bois, métal, plastique.

Ce document associe différents matériaux, tels que le bois et le plastique ce qui rend difficile sa fabrication et sa recyclabilité. Bien qu'il soit présenté comme un sol sportif, les performances d'absorption de chocs de ce revêtement ne sont pas communiquées.

Enfin, ce document EP1570143 ne présente aucune solution permettant de limiter les phénomènes de dilatation ou de contraction lors de la pose du revêtement sur une grande surface.

### Exposé de l'invention

L'un des buts de l'invention est donc de remédier aux problèmes de l'art antérieur en fournissant un revêtement de sol sportif qui permette de convertir aisément et de façon temporaire ou permanente une salle existante en une salle de sport pouvant être « polyvalente », c'est-à-dire une salle dans laquelle plusieurs sports peuvent être pratiqués tels que le volleyball, le handball, et pouvant toujours accueillir des évènements non sportifs, sans dépose du sol.

Un autre objectif est de fournir un tel revêtement permettant de satisfaire les exigences définies dans la norme NF EN 14904 de juin 2006 en termes d'absorption de chocs mesurée selon la norme NF EN 14808, de déformation verticale mesurée selon la norme NF EN 14809, d'indentation mesurée selon la norme EN 1516 et de résistance aux chocs mesurée selon la norme EN 1517.

Un autre objectif est de fournir un tel revêtement permettant de satisfaire les exigences définies dans la norme NF EN ISO 11638 en termes de résistance à l'indentation mesurée selon la norme NF-EN ISO 24343-1.

Un objectif de l'invention est notamment de fournir un revêtement de sol qui présente des performances d'absorption de choc et de résistance à l'indentation équivalentes à celles d'un revêtement de sol sportif classique en rouleau et pose collée et d'un sol pour bâtiment à usage classique.

À cet effet il a été mis au point un revêtement de sol sportif en forme de dalle ou lame, à pose libre, et comprenant des moyens d'accouplement avec une dalle ou lame adjacente.

Selon l'invention, le revêtement comprend successivement, du sommet vers le sol, et liées entre elles :

- une couche de surface, pouvant de préférence être constituée de plusieurs couches, mais comprenant au moins une couche souple d'épaisseur comprise entre 0,1 mm et 2 mm et comprenant un module en compression compris entre 10 MPa et 100 MPa ;
- une couche intermédiaire rigide, par opposition au caractère souple de la couche précitée, d'épaisseur comprise entre 3,5 mm et 7 mm et comprenant un module en flexion compris entre 1000 MPa et 10 000 MPa, préférentiellement entre 1000 MPa et 8000 MPa, afin de permettre la pose libre du revêtement car il ne faut pas que cette couche intermédiaire soit trop souple pour que le revêtement soit facile à manipuler, ni trop rigide pour que la découpe du revêtement soit toujours possible ; ladite couche intermédiaire comprenant un module en compression compris entre 35 MPa et 300 MPa ; la couche intermédiaire rigide très stable dimensionnellement permet la pose libre, la résistance à l'indentation, au choc, au roulement, et permet d'inclure au moins en partie des moyens d'accouplement entre les dalles ou lames ; un module en flexion inférieur à 1000 MPa va diminuer la résistance à l'indentation et potentiellement générer des gonfles dans le cas d'une pose libre, ce qui n'est pas souhaitable ; un module en flexion supérieur à 10000 MPa rend la découpe difficile sur chantier et peut provoquer des blanchiments de la matière au niveau du trait de coupe ; un module en flexion inférieur à 8000 MPa est préférable pour s'affranchir des problèmes de coupe quelle que soit la température du chantier ;
- une sous-couche amortissante pour l'absorption des chocs, et la résistance à l'indentation, d'épaisseur supérieure à 3 mm, notamment comprise entre 3 mm et 10 mm, et de préférence entre 5 mm et 10 mm, et présentant un module en compression compris entre 0,5 MPA et 15 MPa ; le module en compression ne peut être inférieur à 0,5 MPa sans dégrader la résistance à l'indentation, ni supérieur à 15 MPa sans fortement diminuer l'absorption de chocs.

De ce qui précède, l'invention permet de fournir un revêtement à pose libre, c'est-à-dire qui permette de convertir aisément et de façon temporaire ou permanente une salle existante en une salle de sport et polyvalente.

La combinaison des modules de compression et des épaisseurs de la couche de surface, de la couche intermédiaire rigide et de la sous couche amortissante, contribue à une bonne résistance à l'indentation.

La combinaison du module de compression et de l'épaisseur de la sous-couche amortissante contribue à permettre l'absorption d'au moins 25 % des chocs pour satisfaire les exigences de la norme NF EN 14904 de juin 2006, mesurée selon la norme NF EN 14808.

Les caractéristiques à la base de l'invention permettent donc d'obtenir un bon compromis entre résistance à l'indentation et absorption des chocs. Il est également possible de réaliser une pose sans préparation, sur un support légèrement déformé, c'est-à-dire n'ayant pas de creux supérieur à 2 mm sur 2 m.

De préférence la couche souple est réalisée à base de polychlorure de vinyle, polyéthylène, polypropylène, polyuréthane thermoplastique ou bien de linoléum.

Afin d'améliorer la résistance au cisaillement du revêtement, la couche souple comprend un module en traction compris entre 100 MPa et 1000 MPa.

La couche intermédiaire est, quant à elle, réalisée de préférence à base de polychlorure de vinyle, polyéthylène, ou polypropylène. Afin d'améliorer la résistance au cisaillement du revêtement, la couche intermédiaire comprend un module en traction compris entre 500 MPa et 3000 MPa. Le module en traction est mesuré selon le document technique CSTB 99030-01. La couche intermédiaire peut être compacte ou moussée.

En fonction de la compatibilité des matériaux, la couche intermédiaire est liée à la sous-couche par l'intermédiaire d'une couche de liaison, par exemple sous la forme d'un adhésif double face, d'une couche de colle polyuréthane réactive, un film co-polyester (coPes) ou d'une couche de colle thermofusible.

La couche intermédiaire comprend de préférence une masse surfacique comprise en 4 kg/m² et 9,5 kg/m².

La sous-couche amortissante est réalisée de préférence à base de polyéthylène moussé, PVC moussé, polyuréthane moussé, caoutchouc ou de liège. Cette sous-couche comprend de préférence une densité comprise entre 90 kg/m³ et 400 kg/m³. Cette caractéristique permet d'améliorer les performances d'absorption des chocs du revêtement selon l'invention.

La sous-couche amortissante comprend de préférence une masse surfacique comprise entre 390 g/m² et 1300 g/m².

La sous-couche amortissante présente de préférence sur sa face en regard du sol un revêtement antidérapant, par exemple à base d'éthylène vinyle acétate.

La couche de surface présente, quant à elle, une masse surfacique comprise de préférence entre 100 g/m² et 3000 g/m², de préférence entre 100 et 800 g/m². La couche de surface est préférentiellement compacte.

Les moyens d'accouplement du revêtement selon l'invention peuvent être de type approprié, et ils se présentent par exemple sous la forme de logements de réception d'un dispositif de connexion, usiné dans la sous-couche amortissante, ou dans la couche de surface, et dans au moins une partie de l'épaisseur de la couche intermédiaire, tels que décrits dans le document FR3128478, dont le contenu est incorporé par référence.

Selon une autre forme de réalisation, les moyens d'accouplement sont du type mâles/femelles ou hermaphrodites, tels que décrits dans les documents, FR3024990, FR3090711, FR3089534, FR3105280, dont le contenu est incorporé par référence, et sont réalisés au moins dans l'épaisseur des bords de la couche intermédiaire, de manière complémentaire sur des bords opposés ou adjacents.

De préférence, dans cette forme de réalisation, la sous-couche déborde horizontalement d'un bord de la couche intermédiaire, et est en retrait au niveau du bord adjacent ou opposé complémentaire (c'est-à-dire au niveau du bord comprenant des moyens d'accouplement complémentaire) de sorte à s'étendre sous la couche de surface et la couche intermédiaire d'un revêtement adjacent auquel ledit revêtement est accouplé, et ce pour limiter les sollicitations mécaniques au droit des moyens d'accouplement.

Quel que soit la forme de réalisation des moyens d'accouplement, la couche de surface présente préférentiellement au moins un bord chanfreiné de manière à limiter le désaffleurement entre les couches de surface de deux dalles adjacentes. Le bord chanfreiné permet également de créer un logement pour la réalisation d'une jonction par soudure à chaud à l'aide d'un cordon de soudure de deux dalles adjacentes. Le cordon de soudure est réalisé dans une matière similaire ou compatible avec la composition des couches de surface et permet de contrer les effets de dilatation entre deux dalles.

Le revêtement de sols sportifs selon l'invention comprend une masse surfacique comprise de préférence entre 5 kg/m² et 13,3 kg/², et de façon plus préférentielle entre 7 kg/m² et 9 kg/m².

Le revêtement de sols sportifs selon l'invention possède une épaisseur comprise entre 6,5 mm et 18 mm, de préférence entre 8 mm et 12 mm.

### Brève description des dessins

La [Fig.1] est une vue en coupe transversale d'une forme de réalisation particulière d'un revêtement selon l'invention.
La [Fig.2] est une vue similaire à celle de la figure 1, illustrant un autre mode de réalisation
La [Fig.3] est une vue en perspective au niveau des moyens d'accouplement, illustrant la sous-couche amortissante en débordement du bord de la couche intermédiaire et de la couche de surface.
La [Fig.4] est une vue similaire à celle de la figure 3, en coupe transversale.
La [Fig.5] est une vue en perspective illustrant un mode de réalisation comprenant un joint disposé entre deux dalles ou lames adjacentes.
La [Fig.6] est une vue en perspective illustrant un mode de réalisation d'un joint pouvant être disposé entre deux dalle ou lames adjacentes.
La [Fig.7] est une vue similaire à celle de la figure 5, en coupe transversale.

### Description détaillée de l'invention

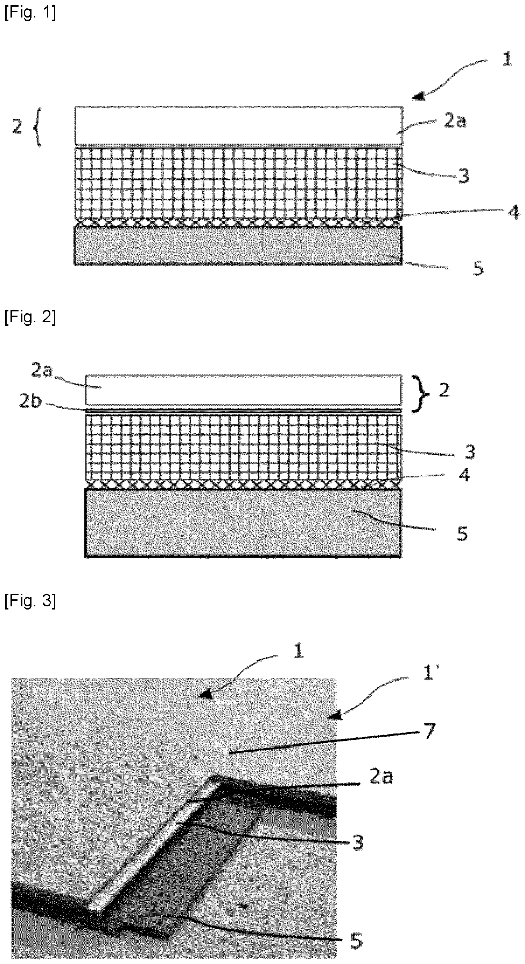

En référence aux figures 1 à 7, l'invention concerne un revêtement (1) de sol sportif en forme de dalle ou de lame, à pose libre, permettant de convertir de façon temporaire ou permanente une salle existante en une salle « polyvalente » et une salle de sport, c'est-à-dire en une salle dans laquelle plusieurs sports peuvent être pratiqués tels que le volleyball, le handball, et pouvant accueillir des évènements non sportifs, tout en garantissant le respect des exigences de la norme NF EN 14904 de juin 2006 en termes d'absorption des chocs, de déformation verticale, d'indentation et de résistance aux chocs, et à la fois les exigences de la norme NF EN ISO 11638 mesurée selon la NF-EN ISO 24343-1 en termes de résistance à l'indentation.

Le revêtement (1) selon l'invention assure une protection optimale aux utilisateurs contre les blessures potentielles dues aux impacts répétés de la pratique sportive.

L'invention est particulièrement adaptée pour réaliser des poses libres continues, c'est-à-dire dans lesquelles les dalles ou lames sont jointives, sur des grandes surfaces, notamment supérieures à 100 m², voire jusqu'à 1000 m², tout en diminuant les effets des phénomènes de dilatation/contraction. Les dalles ou lames présentent une largeur et une longueur généralement comprises entre 50 cm et 150 cm, de préférence entre 50 cm et 100 cm.

L'invention vise également à maintenir l'épaisseur totale du revêtement (1) de sol sportif entre 6,5 mm et 18 mm, de préférence entre 8 mm et 11 mm, tout en garantissant une masse surfacique totale comprise entre 5 kg/m² et 13,3 kg/m², idéalement entre 7 kg/m² et 9 kg/m². Ces dimensions et ce poids garantissent à la fois la portabilité et la résistance du revêtement (1).

Le revêtement (1) de sol sportif se présente sous la forme d'une dalle ou d'une lame à pose libre, et comprend des moyens d'accouplement (6) pour lier les dalles ou lames adjacentes.

Le revêtement (1) comprend au moins une couche de surface (2), d'une couche intermédiaire (3) rigide et d'une sous-couche (5) amortissante destinée à être en contact avec le sol, liées ensemble dans cet ordre, du haut vers le bas.

La couche de surface (2) comprend au moins une couche souple (2a) d'épaisseur comprise entre 0,1 mm et 2 mm et présentant un module en compression compris entre 10 MPa et 100 Mpa, mesuré selon la norme EN ISO 604avec v=20mm/min, et un module en traction compris entre 100 Mpa et 1000 Mpa, mesuré selon le document technique du CSTB 99030-01. La couche de surface (2) est préférentiellement compacte. Une épaisseur de couche de surface (2) comprise entre 0,1 et 2mm, préférentiellement entre 1 et 2mm permet notamment de réduire la force d'un impact.

Cette couche peut être fabriquée à partir de divers matériaux, tels que le PVC, notamment le PVC plastifié, PE, PP, TPU ou linoleum, par des procédés connus tel que le calandrage, l'enduction, l'extrusion ou le pressage. Elle est conçue pour être suffisamment résistante à l'usure, voire antidérapante. La couche de surface (2) peut être soit une couche unie, soit une combinaison d'une couche souple (2a) transparente avec un film décor (2b). Elle est éventuellement vernie de façon classique. La couche souple (2a) transparente présente une épaisseur généralement comprise entre 0,15 et 1,95 mm, préférentiellement entre 1 et 1,95 mm. Le film décor (2b) peut être imprimé par un procédé d'héliogravure ou encore par impression jet d'encre. A titre d'exemple, la couche de surface (2) est transparente est comprend 27% en poids de plastifiant, 70% en poids de PVC, 3% en poids d'autres additifs.

La couche intermédiaire (3) rigide possède une épaisseur comprise entre 3,5 mm et 7 mm, un module en flexion compris entre 1000 Mpa et 10 000 Mpa mesuré selon la norme NF EN ISO 178, de préférence entre 1000 Mpa et 8000 Mpa, et de préférence un module en compression compris entre 35 Mpa et 300 Mpa, mesuré selon la norme EN ISO 604 avec v=20mm/min, et un module en traction compris entre 500 Mpa et 3000 Mpa, mesuré selon le document technique CSTB 99030-01. Cette couche, qui peut être réalisée à base de PVC, PE ou PP, participe à l'absorption des impacts et fournit une stabilité structurelle à l'ensemble du revêtement (1). Cette couche intermédiaire (3) rigide peut être réalisée par extrusion ou calandrage. A titre d'exemple, celle-ci peut être réalisée à partir de PVC comprenant des charges et plastifié à moins de 10% en poids total de la couche, préférentiellement à moins de 5% en poids total de la couche.

Les charges peuvent être choisies dans le groupe comprenant le carbonate de calcium, les craies, le kaolin, le talc, la silice. La couche intermédiaire (3) peut en outre contenir au moins un additif choisi dans le groupe suivant : stabilisants thermiques, agents dessiccants, lubrifiants, agents de mise en oeuvre (« processing aids »), pigments, ignifugeants.

Les plastifiants peuvent être choisis parmi le Diisononyl Phtalate (DINP), le Diisodecyl Phtalate (DIDP), le 2-Ethylhexyl Diphényle Phosphate (DPO), le Téréphtalate dioctylique (DOTP), le 1 ,2-cyclohexane dicarboxylique acide diisononyl ester (DINCH), les plastifiants de la famille des benzoates, les plastifiants de la famille des adipates, les plastifiants commercialisés sous la Marque PEVALEN^{®} par la société Perstorp, l'huile de soja epoxydée (HSE), l'époxy stéarate d'octyle (ESO), les plastifiants totalement ou partiellement biosourcés comme par exemple les plastifiants de la gamme polysorb^{®} exeID 37 commercialisés par la société Roquette Pharma, les plastifiants de la gamme Citrofol^{®} commercialisés par la société Jungbunzlauer International AG, ou encore les plastifiants de la gamme Soft-n-safe^{®} commercialisés par la société Danisco. Les plastifiants liquides peuvent être utilisés seuls ou en mélange.

A titre d'exemple, la couche intermédiaire (3) rigide peut être obtenue à partir d'une composition comprenant 55% de charges, 43% de PVC, 0,3% d'agents gonflants et 2,7% d'autres additifs, sans ajouts de plastifiants.

La sous-couche (5) amortissante est conçue pour absorber la majorité des chocs, réduire la force d'un impact, et résister à l'indentation. Cette couche présente une épaisseur supérieure à 3 mm, idéalement entre 3 mm et 10 mm, et un module en compression compris entre 0,5 Mpa et 15 Mpa, mesuré selon la norme EN ISO 604 avec v=20mm/min. Elle peut être fabriquée à partir de PE moussé, de PVC moussé, de PU moussé, de caoutchouc ou de liège, par des procédés d'extrusion ou d'enduction, par exemple d'enduction de plastisol de PVC expansé. Le moussage peut être réalisé de façon mécanique ou par l'utilisation d'agents gonflants. De façon préférentielle, la sous-couche (5) présente un mousse à cellule fermée, plus préférentiellement dont la composition est réticulée. A titre d'exemple, la mousse utilisée comprend 30% en poids de plastifiant, 8% en poids de charge, 57% en poids de polychlorure de vinyle et 5% en poids d'autres additifs.

Selon une forme de réalisation particulière, le revêtement (1) de sol sportif comprend une couche de liaison (4), telle qu'un adhésif double face, une couche de colle polyuréthane réactive, un film co-polyester (coPes) ou une couche de colle thermofusible, positionnée pour lier la couche intermédiaire (3) et la sous-couche (5).

En outre, le revêtement (1) comprend des moyens d'accouplement (6), qui peuvent être des logements de réception d'un dispositif de connexion, tels qu'illustrés dans le document FR3128478, usinés depuis la couche de surface (2), ou de préférence depuis la sous-couche (5) amortissante, et dans au moins une partie de l'épaisseur de la couche intermédiaire (3).

Le dispositif de connexion peut présenter un joint (8) qui se positionne entre les dalles ou lames et qui améliore la résistance à la dilatation pour des poses sur des surfaces supérieures ou égales 100 m².

Dans la forme de réalisation illustrée aux figures 3, 4, 5 et 7, ces moyens d'accouplement (6) peuvent être de type mâles/femelles ou hermaphrodites, réalisés au moins dans l'épaisseur des bords de la couche intermédiaire (3), de manière complémentaire sur des bords opposés ou adjacents.

Les moyens d'accouplement (6) permettant de relier plusieurs dalles ou lames entre elles. De façon générale, les moyens d'accouplement (6) mâles/femelles comprennent un premier profil d'usinage, tel qu'une languette, usiné sur un bord d'un et configuré pour s'accoupler à un second profil d'usinage complémentaire, tel qu'une rainure, usiné sur un bord opposé ou adjacent d'un revêtement voisin (1') ou d'un joint (8).

Quelle que soit la forme de réalisation des moyens d'accouplement (6), la couche de surface (2a) présente préférentiellement au moins un bord chanfreiné (7) de manière à limiter le désaffleurement entre les couches de surface de deux dalles (1,1') adjacentes. Le bord chanfreiné (7) permet également de créer un logement pour la réalisation d'une jonction par soudure à chaud à l'aide d'un cordon de soudure de deux dalles adjacentes. Le cordon de soudure est réalisé dans une matière similaire ou compatible avec la composition des couches de surface et permet de contrer les effets de dilatation entre deux dalles (1,1', 1").

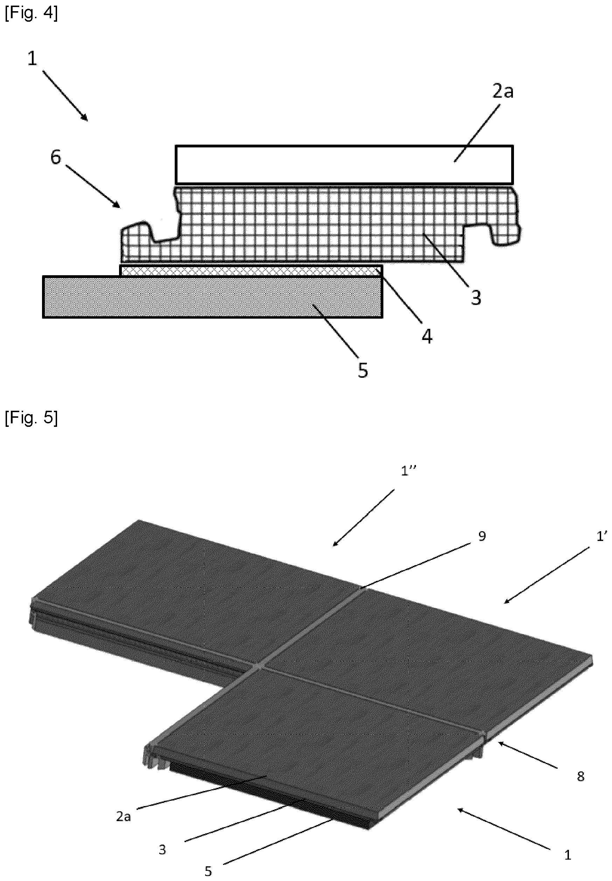

Selon les figures 3 et 4, la sous-couche (5) déborde horizontalement d'un bord de la couche intermédiaire (3), et est en retrait au niveau du bord adjacent ou opposé complémentaire de sorte à s'étendre sous la couche de surface (2) et la couche intermédiaire (3) d'un revêtement (1) adjacent auquel ledit revêtement (1) est accouplé, pour limiter les sollicitations mécaniques sous les moyens d'accouplement. Les valeurs du débordement et du retrait sont identiques, et sont de préférence comprise entre 10 mm et 50 mm, préférentiellement entre 20 et 40 mm

Une fois accouplés, les moyens d'accouplement (6) bloquent le déplacement de deux dalles ou lames à la fois dans une direction verticale, c'est-à-dire perpendiculaire au sol, et horizontale c'est-à-dire parallèle au plan formé par le sol.

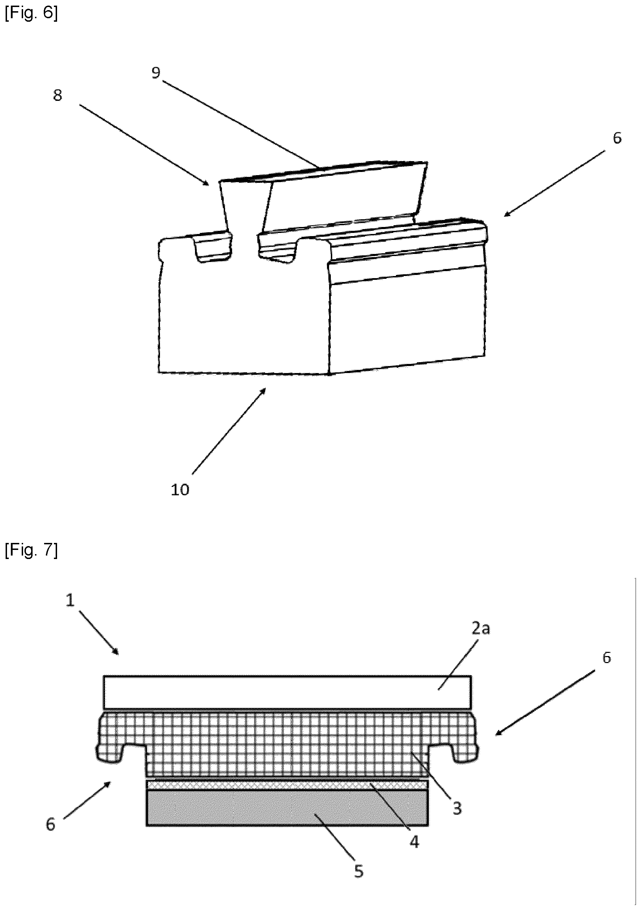

Selon les figures 5 et 7, Le revêtement (1) de sol sportif se présente sous la forme d'une dalle ou d'une lame à pose libre, et comprenant sur ses quatre bords des moyens d'accouplement (6) mâles tels que décrit dans le brevet FR3024990 et permettant un assemblage avec un joint (8) dont le profil comprend des moyens d'assemblages femelles (6) correspondant, tels que décrit dans le brevet FR3024990. La sous-couche (5) est en retrait horizontalement relativement à la couche de surface (2a) et à la couche intermédiaire (3) de sorte à créer un espace entre deux revêtements adjacent (1, 1') dans lequel vient se loger le joint (8).

Selon les figures 6 et 7, le joint (8) présente un profil comprenant de part et d'autre des moyens d'assemblages femelles (6) tel que décrit dans le brevet FR3024990. Lors de l'assemblage entre plusieurs dalles ou lames (1, 1', 1"), la surface des dalles ou lames est à l'affleurement de la face supérieure (9) du joint (8). La face inférieure (10) du joint (8) est en appui sur le sol de manière à garantir une bonne solidité d'assemblage. Un joint (8) peut être réalisé par extrusion ou tout autre procédé. Sa composition peut être obtenue à partir de PVC, caoutchouc, silicone, nitrile ou autres élastomères équivalents et éventuellement avec une armature métallique.

Des tests et mesures ont été réalisés sur un exemple de réalisation de l'invention, tel que décrit dans le tableau ci-dessous. La structure des couches liées les unes aux autres pour former le revêtement est définie dans la 1ère colonne.

**[Table 1]**

| Structure | Poids g/m² | Epaisseur Mm | Module en flexion MPa | Module en compression MPa | Module en traction MPa |
|---|---|---|---|---|---|
| Vernis PUR | 25 | 0,025 | / | / | / |
| Couche d'usure transparente en PVC | 620 | 0,5 | / | 14,2 | 453,8 |
| Film imprimé décor en PVC | 90 | 0,12 | / | / | / |
| Couche intermédiaire (3) extrudée ou calandrée en PVC chargé | 5468 | 4,15 | 4444,4 | 80,8 | 807,9 |
| Couche de liaison (4) colle thermofusible base EVA | 55 | 0 | / | / | / |
| Sous-couche (5) amortissante mousse polyéthylène réticulée à cellule fermée | 650 | 5 | / | 9 | / |

Le module est flexion est représentatif de l'aisance à la pose, notamment la pose libre.

Le module compression est représentatif de la résistance à l'indentation

Le module en traction est représentatif de la résistance au cisaillement du revêtement (1).

Les résultats des tests et mesures sont compilés dans le tableau ci-dessous

**[Table 2]**

| Propriété | Méthodes | Unités | Résultats | Exigences | Avis |
|---|---|---|---|---|---|
| Absorption de chocs | EN 14808 | % | 27 | 25-75 | Conforme |
| | | | -1 / 0 | +/- 5 de la moyenne | |
| Déformation verticale | EN 14809 | mm | 0,50 | ≤ 5,0 | Conforme |
| Indentation | EN 1516 | mm | 0,04 | ≤ 0,5 | Conforme |
| Résistance aux chocs | EN 1517 | / | Absence de dégradation | Absence de dégradation | Conforme |
| Indentation | NF-EN ISO 24343-1 | mm | 0,14 mm | ≤ 0,2mm à 2h30 | Conforme |

## Revendications

1. Revêtement (1) de sol sportif en forme de dalle ou lame à pose libre et comprenant des moyens d'accouplement (6) avec une dalle ou lame adjacente ***caractérisé* en ce qu'**il comprend successivement, du sommet vers le sol, et liées entre elles :
- une couche de surface (2) comprenant au moins une couche souple (2a) d'épaisseur comprise entre 0,1 mm et 2 mm et comprenant un module en compression compris entre 10 MPa et 100 MPa ;
- une couche intermédiaire (3) rigide d'épaisseur comprise entre 3,5 mm et 7 mm et comprenant un module en flexion compris entre 1000 MPa et 10 000 MPa, et un module en compression compris entre 35MPa et 300 MPa ;
- une sous-couche (5) amortissante d'épaisseur supérieure à 3 mm, notamment comprise entre 3 mm et 10 mm, et de préférence entre 5 mm et 10 mm, et présentant un module en compression compris entre 0,5 MPa et 15 MPa.

2. Revêtement (1) de sol sportif (1) selon la revendication 1, ***caractérisé* en ce que** la couche souple (2a) comprend un module en traction compris entre 100 MPa et 1000 MPa.

3. Revêtement (1) de sol sportif (1) selon l'une des revendications précédentes, ***caractérisé* en ce que** la couche intermédiaire (3) comprend un module en traction compris entre 500 MPa et 3000 MPa.

4. Revêtement (1) de sol sportif (1) selon l'une des revendications précédentes, ***caractérisé* en ce que** la couche intermédiaire (3) est liée à la sous-couche (5) par l'intermédiaire d'une couche de liaison (4), telle qu'un adhésif double face, d'une couche de colle polyuréthane réactive, un film co-polyester ou d'une couche de colle thermofusible

5. Revêtement (1) de sol sportif (1) selon l'une des revendications précédentes, ***caractérisé* en ce que** la couche intermédiaire (3) comprend une masse surfacique comprise entre 4 kg/m² et 9,5 kg/m².

6. Revêtement (1) de sol sportif (1) selon l'une des revendications précédentes, ***caractérisé* en ce que** la sous-couche (5) comprend une densité comprise entre 90 kg/m³ et 400 kg/m³.

7. Revêtement (1) de sol sportif (1) selon l'une des revendications précédentes, ***caractérisé* en ce que** les moyens d'accouplement (6) sont des logements de réception d'un dispositif de connexion, usinés dans la sous-couche (5) amortissante, ou dans la couche de surface (2), et dans au moins une partie de l'épaisseur de la couche intermédiaire (3).

8. Revêtement (1) de sol sportif (1) selon l'une des revendications précédentes, ***caractérisé* en ce que** les moyens d'accouplement (6) sont du type mâles/femelles ou hermaphrodites, et réalisés au moins dans l'épaisseur des bords de la couche intermédiaire (3), de manière complémentaire sur des bords opposés ou adjacents.

9. Revêtement (1) de sol sportif (1) selon la revendication 8, ***caractérisé* en ce que** la sous-couche (5) déborde horizontalement d'un bord de la couche intermédiaire (3), et est en retrait au niveau du bord adjacent ou opposé complémentaire de sorte à s'étendre sous la couche de surface (2) et la couche intermédiaire (3) d'un revêtement (1) adjacent auquel ledit revêtement (1) est accouplé.

10. Revêtement (1) de sol sportif (1) selon l'une des revendications précédentes, ***caractérisé* en ce qu'**il comprend une masse surfacique comprise entre 5 kg/m² et 13,3 kg/m², de préférence entre 7 kg/m² et 9 kg/m². 1
